# EUROPÄISCHE PATENTSCHRIFT

(11) **EP 2 439 110 B1**
(45) Veröffentlichungstag und Bekanntmachung des Hinweises auf die Patenterteilung: **28.11.2012**
(21) Anmeldenummer: 11182085.8
(22) Anmeldetag: 21.09.2011
(51) Int. Cl.: B60R 19/24

(54) **System zum Ausbilden einer Befestigung einer Stoßfängerverkleidung an ein Karosserieteil**
System for fixing a bumper skin to a car body.
Sytème de fixation d'une peau de pare-choc à une pièce de carosserie.

(30) Priorität: 06.10.2010 DE 202010013931 U
(43) Veröffentlichungstag der Anmeldung: 11.04.2012
(73) Patentinhaber: Rehau AG + Co, 95111 Rehau (DE)
(72) Erfinder: Strobel, Karsten, 95111 Rehau (DE); Uhlig, Nico, 08529 Plauen (DE); Jakobs, Holger, 72135 Dettenhausen (DE)

(56) Entgegenhaltungen:
- EP-A2- 1 243 477
- DE-A1- 19 736 755
- DE-A1-102007 019 935
- US-A1- 2009 016 071

## Beschreibung

### Hintergrund der Erfindung

Die vorliegende Erfindung betrifft ein System zum Ausbilden einer Befestigung einer Stoßfängerverkleidung an ein Karosserieteil umfassend ein Befestigungsteil und ein Verstärkungselement.

Bekannte Systeme bzw. Vorrichtungen zum Ausbilden einer Befestigung einer Stoßfängerverkleidung an ein Karosserieteil umfassen meist neben einem an einem Karosserieteil befestigbaren Befestigungsteil aus Kunststoffmaterial, das im Befestigungszustand Kontakt zu der Stoßfängerverkleidung aufweist, auch ein Verstärkungselement, das zur Verstärkung der Befestigung bzw. Befestigungsverbindung vorgesehen ist. Durch Vorsehen des Verstärkungselements kann die von den jeweils vorgesehenen Befestigungsmitteln zur Befestigung der Stoßfängerverkleidung an dem Karosserieteil bereitgestellte Befestigungskraft - also insbesondere z.B. eine Schraubenkraft - auf eine größere Fläche verteilt werden. Auf diese Weise wird wirksam ein übermäßiges nachteiliges Fließen des Kunststoffmaterials sowohl des Befestigungsteils als auch der Stoßfängerverkleidung vermieden.

Die Verstärkungselemente, welche bei bekannten Lösungen z.B. in Form einer Metallschiene ausgebildet sein können, sind zur Erleichterung der Montage an dem jeweiligen Befestigungsteil meist z.B. über Spreiznieten gehalten bzw. vorarretiert, so dass das Befestigen der Stoßfängerverkleidung an dem Karosserieteil auch den Montageschritt des Anbringens bzw. Vorarretierens des Verstärkungselements an dem Befestigungsteil über hierfür vorgesehene zusätzliche Arretierungsmittel, wie die Spreiznieten, umfasst.

DE 10 2007 019 935 A offenbart ein System zum Ausbilden einen Befestigung einem Stoßfängerverkleidung an ein Karosserieteil gemäβ der Oberbegriff der Anspruchs 1.

### Zugrundeliegende Aufgabe

Der vorliegenden Erfindung liegt die Aufgabe zugrunde, ein System zum Ausbilden einer Befestigung einer Stoßfängerverkleidung an ein Karosserieteil anzugeben, welches ein Befestigungsteil und ein Verstärkungselement umfasst, und mit welchem die Stoßfängerverkleidung auf praktische Weise an dem Karosserieteil befestigbar ist ohne zusätzliche Arretierungsmittel zum Halten des Verstärkungselements an dem Befestigungsteil vorsehen zu müssen.

### Erfindungsgemäße Lösung

Diese Aufgabe wird erfindungsgemäß mit einem System zum Ausbilden einer Befestigung einer Stoßfängerverkleidung an ein Karosserieteil mit den Merkmalen des Anspruchs 1 gelöst.

Im Unterschied zu bekannten Lösungen, welche über zusätzliche Arretierungsmittel bzw. Befestigungsmittel, wie z.B. Spreiznieten, ein Halten bzw. Vorarretieren des Verstärkungselements an dem Befestigungsteil vornehmen, kann bei Verwendung des erfindungsgemäßen Systems auf den Einsatz dieser Arretierungsmittel verzichtet werden, einhergehend mit einer Kostenreduktion durch Einsparung von Arretierungsmitteln und entsprechenden Montagevorgängen. Zum Halten bzw. Vorarretieren des Verstärkungselements an dem Befestigungsteil sind bei dem erfindungsgemäßen System eine hakenförmige Einhängvorrichtung, wenigstens ein Rastelement und wenigstens eine Rastöffnung vorgesehen. Die Einhängvorrichtung und das Rastelement sind an dem Befestigungsteil angeformt und erstrecken sich von der Anlagefläche. Die Rastöffnung ist an dem Verstärkungselement vorgesehen und erstreckt sich vorzugsweise durchgehend durch das Verstärkungselement.

Erfindungsgemäß kann ein Halten bzw. ein Vorarretieren des Verstärkungselements ohne zusätzliche Arretierungsmittel am dem Befestigungsteil derart erfolgen, dass das Verstärkungselement in die Einhängposition gebracht wird, wobei in der Einhängposition ein Auflage-Abschnitt des Öffnungsrands der Einhängöffnung auf dem Anschlagsbereich der hakenförmigen Einhängvorrichtung aufliegt. Zum Einnehmen dieser Einhängposition ist vorgesehen, dass der Auflage-Abschnitt zwischen einer Wandungsseite ― wobei diese Wandungsseite eine der Anlagefläche zugewandte Wandungsseite der von der Anlagefläche beabstandeten Wandung ist - und der Anlagefläche in Richtung des Anschlagsbereichs bewegt wird. Die Wandung ist bevorzugt eine parallel zu der Anlagefläche angeordnete Wandung bzw. bevorzugt eine im Wesentlichen parallel zu der Anlagefläche angeordnete Wandung.

Das Verstärkungselement liegt im Befestigungszustand zumindest bereichsweise, vorzugsweise flächig, weiter vorzugsweise vollflächig auf der Anlagefläche auf und ist im Befestigungszustand vorzugsweise von der Stoßfängerverkleidung beabstandet. Ferner weist das Befestigungsteil im Befestigungszustand Kontakt zu der Stoßfängerverkleidung auf, wobei der Kontakt vorzugsweise in Form eines flächigen bzw. wenigstens bereichsweise flächigen Kontakts ausgebildet ist.

Durch Bewegen des Auflage-Abschnitts zwischen dieser Wandungsseite und der Anlagefläche in Richtung des Anschlagsbereichs ist die Rastöffnung des Verstärkungselements über das Rastelement schiebbar, wobei das Rastelement in der Rastöffnung rastend aufgenommen ist, sobald die Einhängposition erreicht ist. In der Einhängposition ist das Verstärkungselement dann über die Rastverbindung, welche von der Rastöffnung und dem in der Rastöffnung rastend aufgenommenen Rastelement ausgebildet wird, und über die Einhängvorrichtung wirksam an dem Befestigungsteil gehalten bzw. vorarretiert. Anschließend kann dann die Stoßfängerverkleidung über wenigstens ein Befestigungsmittel - vorzugsweise wenigstens eine Schraube - an dem Karosserieteil befestigt werden, wobei sich das Befestigungsmittel durchgehend durch die Befestigungsöffnung des Verstärkungselements, die Befestigungsöffnung des Befestigungsteils und eine Befestigungsöffnung der Stoßfängerverkleidung erstreckt.

Durch Vorsehen des Verstärkungselements, dass insbesondere aus einem metallischen Werkstoff bestehen kann, kann die von den jeweils vorgesehenen Befestigungsmitteln zur Befestigung der Stoßfängerverkleidung an dem Karosserieteil bereitgestellte Befestigungskraft - also insbesondere z.B. eine Schraubenkraft - auf eine größere Fläche verteilt werden. Auf diese Weise wird wirksam ein übermäßiges nachteiliges Fließen des vorzugsweise aus Kunststoffmaterial bestehenden Befestigungsteils und der vorzugsweise aus Kunststoffmaterial bestehenden Stoßfängerverkleidung vermieden.

Es kann insbesondere auch eine beliebige Mehrzahl von Rastelementen vorgesehen sein, wobei die Mehrzahl der Rastelemente vorzugsweise der Mehrzahl der Rastöffnungen entspricht und in der Einhängposition des Verstärkungselements jeweils ein Rastelement in jeweils einer Rastöffnung rastend aufgenommen ist.

Bei einer bevorzugten Ausführungsform ist an der der Anlagefläche zugewandten Wandungsseite wenigstens eine Klemmfläche ausgebildet, wobei zum Einnehmen der Einhängposition der Auflage-Abschnitt zwischen der Klemmfläche und der Anlagefläche in Richtung des Anschlagsbereichs bewegbar ist, und wobei das Verstärkungselement in der Einhängposition klemmend zwischen der Klemmfläche und der Anlagefläche gehalten ist und vorzugsweise flächig an der Anlagefläche anliegt.

Durch Vorsehen eines klemmenden Haltens des Verstärkungselements in der Einhängposition zwischen der Klemmfläche und der Anlagefläche in Verbindung mit einem zumindest bereichsweise flächigen Anliegen des Verstärkungselements an der Anlagefläche kann eine sehr stabile Vorarretierung bzw. Fixierung des Verstärkungselements an dem Befestigungsteil vor dem Befestigen der Stoßfängerverkleidung an dem Karosserieteil bereitgestellt werden.

Bei einer praktischen Ausführungsform sind zwei Rastöffnungen und zwei Rastelemente vorgesehen, wobei jeweils eins der Rastelemente dafür vorgesehen ist, in eine der Rastöffnungen einzurasten, wobei sich die Einhängöffnung zwischen den Rastöffnungen befindet. Das Befestigungsteil und das Verstärkungselement können ferner jeweils wenigstens zwei Befestigungsöffnungen aufweisen, wobei sich die beiden Rastöffnungen und die Einhängöffnung zwischen den Befestigungsöffnungen des Verstärkungselements befinden. Diese praktische Ausführungsform ermöglicht zum einen ein stabiles und auf einfache und praktische Weise zu realisierendes Halten bzw. Vorarretieren des Verstärkungselements an dem Befestigungsteil und ferner auch eine sehr stabile Befestigung der Stoßfängerverkleidung an dem Karosserieteil.

Bei einer weiteren praktischen Ausführungsform weist das Verstärkungselement wenigstens einen umgebogenen Randbereich auf, welcher im Befestigungszustand vorzugsweise auf einem Randbereich des Befestigungsteils zumindest bereichsweise flächig aufliegt. Über den umgebogenen Randbereich wird eine zusätzliche Anlagefläche bzw. Auflagefläche zur Auflage an dem Befestigungsteil bereitgestellt, die eine zusätzliche Stabilisierung des Verstärkungselements an dem Befestigungsteil ermöglicht. Besonders bevorzugt kann bei dieser weiteren praktischen Ausführungsform das Verstärkungselement zwei umgebogene Randbereiche aufweisen, die sich wenigstens abschnittsweise in parallelen und voneinander beabstandeten Richtungen erstrecken, wobei weiter vorzugsweise jeder Randbereich im Befestigungszustand auf jeweils einem Randbereich des Befestigungsteils zumindest bereichsweise flächig, vorzugsweise vollflächig aufliegt. Auf diese Weise werden zwei zusätzliche Auflageflächen bereitgestellt, einhergehend mit einer sehr wirksamen zusätzlichen Stabilisierung des Verstärkungselements an dem Befestigungsteil. Das Verstärkungselement weist zudem durch das vorsehen von zwei umgebogene Randbereiche eine wesentlich erhöhte Verwindungssteifigkeit und einen wesentlich erhöhten Knickwiderstand auf.

Das Verstärkungselement ist bevorzugt aus einem metallischen Werkstoff gebildet, insbesondere aus einem Blech geformt. Als metallische Werkstoffe eignen sich insbesondere Stähle oder Aluminiumlegierungen. Das Verstärkungselement kann auch als ein Spritzgussteil ausgebildet sein, wobei der hierbei verwendete Kunststoff zumindest bereichsweise eine Partikel- und/oder Faserverstärkung aufweist. Das Befestigungsteil ist bevorzugt in Form eines Spritzgussteils ausgebildet, so dass auch das Befestigungsteil des erfindungsgemäßen Systems auf praktische und kostengünstige Weise durch Spritzgussfertigung in großer Stückzahl herstellen lässt. Der für die Herstellung des Befestigungsteils verwendete Kunststoff kann zumindest bereichsweise eine Partikel- und/oder Faserverstärkung aufweisen.

### Kurzbeschreibung der Zeichnungen

Nachfolgend wird ein Ausführungsbeispiel der Erfindung anhand der beigefügten Zeichnungen näher erläutert. Es zeigt:
- Fig. 1: eine dreidimensionale Darstellung eines erfindungsgemäßen Systems, wobei in dieser Darstellung das Befestigungsteil und das Verstärkungselement voneinander beabstandet dargestellt sind,
- Fig. 2: eine dreidimensionale Darstellung des erfindungsgemäßen Systems, wobei auch diese Darstellung das Befestigungsteil und das Verstärkungselement voneinander beabstandet jedoch aus einer anderen Perspektive zeigt,
- Fig. 3: eine dreidimensionale Darstellung des erfindungsgemäßen Systems, wobei in dieser Darstellung das Verstärkungselement in der Einhängposition an dem Befestigungsteil vorarretiert ist,
- Fig. 4: die Darstellung der Fig. 3 aus einer anderen Perspektive,
- Fig. 5: eine dreidimensionale Darstellung des erfindungsgemäßen Systems, wobei in dieser Darstellung die Einhängvorrichtung des Befestigungsteils die Einhängöffnung des Verstärkungselement durchsetzt, das Verstärkungselement sich jedoch nicht in der Einhängposition befindet,
- Fig. 6: eine dreidimensionale Darstellung des erfindungsgemäßen Systems, die das System aus einer Perspektive zeigt, die sich von der in Fig. 5 vorgesehenen Perspektive unterscheidet, wobei wie in Fig. 5 die Einhängvorrichtung des Befestigungsteils die Einhängöffnung des Verstärkungselement durchsetzt, das Verstärkungselement sich jedoch nicht in der Einhängposition befindet,
- Fig. 7: eine dreidimensionale Darstellung des erfindungsgemäßen Systems zusammen mit einer Stoßfängerverkleidung, wobei in dieser Darstellung das Verstärkungselement in der Einhängposition an dem Befestigungsteil vorarretiert ist,
- Fig. 8: eine dreidimensionale Darstellung des erfindungsgemäßen Systems zusammen mit einer Stoßfängerverkleidung, die das System aus einer Perspektive zeigt, die sich von der in Fig. 7 vorgesehenen Perspektive unterscheidet, wobei auch hier das Verstärkungselement in der Einhängposition an dem Befestigungsteil vorarretiert ist.

Alle Figuren zeigen lediglich eine Teil-Darstellung des Befestigungsteils.

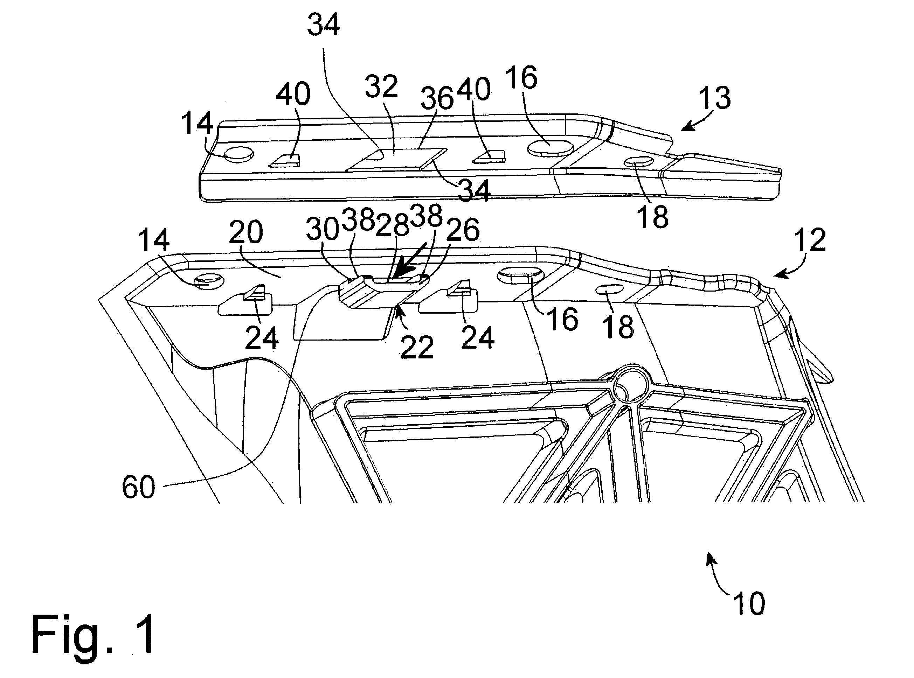

Das in Fig. 1 dargestellte System 10 zum Ausbilden einer Befestigung einer Stoßfängerverkleidung an ein Karosserieteil weist ein Befestigungsteil 12 und ein Verstärkungselement 13 auf. Das Befestigungsteil 12 und das Verstärkungselement 13 weisen jeweils drei Befestigungsöffnungen 14, 16, 18 auf, die sich durchgehend durch das Befestigungsteil 12 bzw. das Verstärkungselement 13 erstrecken, wobei jeweils zwei der Befestigungsöffnungen in Form eines Langlochs 16, 18 ausgebildet sind und die dritte Befestigungsöffnung 14 kreisförmig ausgebildet ist. Eine über das System 10 an ein Karosserieteil befestigbare Stoßfängerverkleidung ist bei dem hier dargestellten Ausführungsbeispiel über zwei Befestigungsmittel (nicht dargestellt) in Form von zwei Schrauben an dem Karosserieteil befestigbar, wobei jeweils ein Befestigungsmittel sich durchgehend durch eine Befestigungsöffnung 14, 16 oder 18 des Verstärkungselements 13, eine Befestigungsöffnung 14, 16 oder 18 des Befestigungsteils 12 und eine Befestigungsöffnung der in dieser Fig.1 nicht dargestellten Stoßfängerverkleidung erstreckt. Eine der Befestigungsöffnungen 14, 16, oder 18 dient als Reserve zur Aufnahme eines dritten Befestigungsmittels für den Fall, dass eine Fehlfunktion oder Beschädigung der anderen Befestigungsmittel oder des Befestigungssystems 10 selbst vorliegt.

Das Verstärkungselement 13 ist zur Verstärkung der Befestigung vorgesehen und das Befestigungsteil 12 weist eine Anlagefläche 20 auf. Auf der Anlagefläche 20 liegt das Verstärkungselement 13 im Befestigungszustand zumindest bereichsweise, vorzugsweise flächig, weiter vorzugsweise vollflächig auf. Ferner weist das Befestigungsteil 12 im Befestigungszustand Kontakt zu der Stoßfängerverkleidung (hier nicht dargestellt) auf.

Zum Halten bzw. Vorarretieren des Verstärkungselements 13 an dem Befestigungsteil 12 sind eine hakenförmige Einhängvorrichtung 22 und zwei Rastelemente 24 vorgesehen. Die Einhängvorrichtung 22 und die Rastelemente 24 sind an dem Befestigungsteil 12 angeformt und erstrecken sich von der Anlagefläche 20. Die Einhängvorrichtung 22 weist eine von der Anlagefläche 20 beabstandete Wandung 26 auf, wobei eine der Anlagefläche 20 zugewandte Wandungsseite 28 der Wandung 26 sich bis zu einem an der Anlagefläche 20 angeformten Anschlagsbereich 30 der Einhängvorrichtung 22 erstreckt. Das Verstärkungselement 13 weist ferner zum Einhängen in die Einhängvorrichtung 22 eine von der Einhängvorrichtung 22 durchsetzbare Einhängöffnung 32 auf, die von einem Öffnungsrand 34 begrenzt ist.

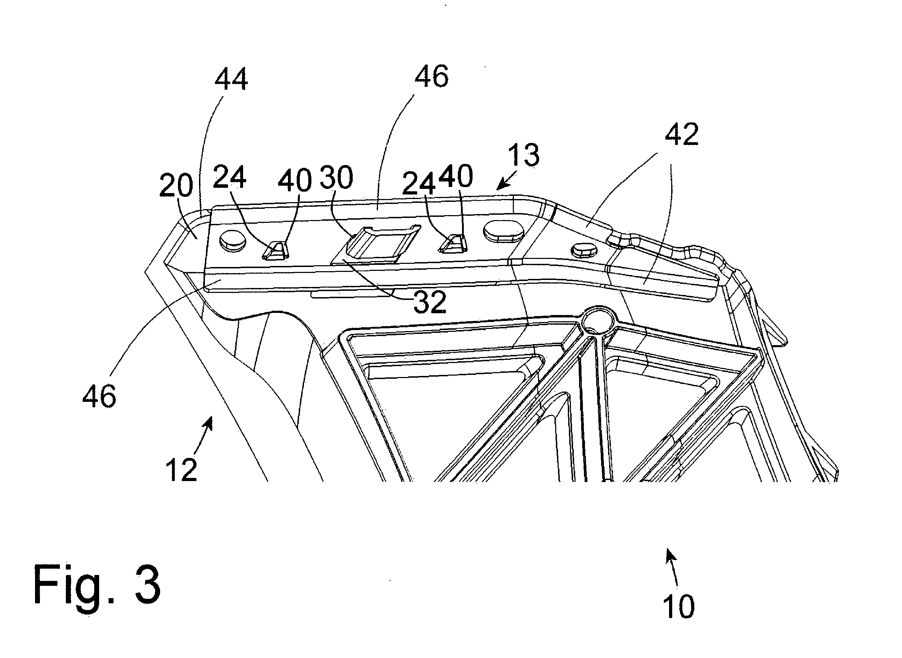

In der Einhängposition des Verstärkungselements 13 liegt ein Auflage-Abschnitt 36 des Öffnungsrands 34 auf dem Anschlagsbereich 30 (vgl. hierzu auch Fig. 3). An der der Anlagefläche 20 zugewandten Wandungsseite 28 sind zwei Klemmflächen 38 ausgebildet, wobei zum Einnehmen der Einhängposition der Auflage-Abschnitt 36 zwischen den beiden Klemmflächen 38 und der Anlagefläche 20 in Richtung des Anschlagsbereichs 30 bewegbar ist (in Fig. 1 durch einen Pfeil schematisch veranschaulicht). Das Verstärkungselement 13 ist in der Einhängposition klemmend zwischen den Klemmflächen 38 und der Anlagefläche 20 gehalten und liegt flächig an der Anlagefläche 20 an (vgl. Fig. 3).

An dem Verstärkungselement 13 sind zwei sich durchgehend durch das Verstärkungselement 13 erstreckende Rastöffnungen 40 vorgesehen. Durch Bewegen des Auflage-Abschnitts 36 zwischen den beiden Klemmflächen 38 und der Anlagefläche 20 in Richtung des Anschlagsbereichs 30 ist jeweils eine der beiden Rastöffnungen 40 über jeweils eines der beiden Rastelemente 24 schiebbar und jedes der beiden Rastelemente 24 ist in jeweils eine der beiden Rastöffnungen 40 rastend aufnehmbar, sobald die Einhängposition erreicht ist. In der Einhängposition ist das Verstärkungselement 12 dann über die beiden Rastverbindungen, welche durch die Rastöffnungen 40 und die in den Rastöffnungen 40 rastend aufgenommenen Rastelemente 24 ausgebildet werden, und über die Einhängvorrichtung 22 wirksam an dem Befestigungsteil 12 gehalten bzw. vorarretiert.

Bei dem hier dargestellten Ausführungsbeispiel ist die Einhängvorrichtung 22 dafür vorgesehen im Fahrzeugkoordinatensystem eine Vorarretierung des Verstärkungselements 13 insbesondere in Z-Richtung bereitzustellen. Die Rastelemente 24 dienen in Verbindung mit den Rastöffnungen 40 im Wesentlichen der Vorarretierung des Verstärkungselements 13 in der Y-Richtung des Fahrzeugkoordinatensystems. Die Arretierung in X-Richtung ist realisiert durch die Ausbildung des Öffnungsrands 34 und der Einhängevorrichtung 22, die so aufeinander abgestimmt sind, dass die Öffnungsränder 34 und die Seitenabschnitte 60 der Einhängevorrichtung 22 nur mit einem geringen Spiel voneinander beabstandet sind. Bei dem Fahrzeugkoordinatensystem handelt es sich um ein dreidimensionales, rechtshändiges Koordinatensystem mit welchem die Lage der Bauteile des Fahrzeugs bzw. Kraftfahrzeugs definiert werden kann. Die X-Achse des Fahrzeugkoordinatensystems zeigt entgegen der Fahrrichtung des Fahrzeugs, die Z-Achse zeigt nach oben und die Y-Achse zeigt in Fahrtrichtung gesehen nach rechts.

Die Einhängöffnung 32 befindet sich zwischen den beiden Rastöffnungen 40, wobei sich die beiden Rastöffnungen 40 und die Einhängöffnung 32 zwischen der kreisförmigen Befestigungsöffnung 14 und der benachbart zu der kreisförmigen Befestigungsöffnung 14 angeordneten Befestigungsöffnung 16 in Form eines Langlochs befinden.

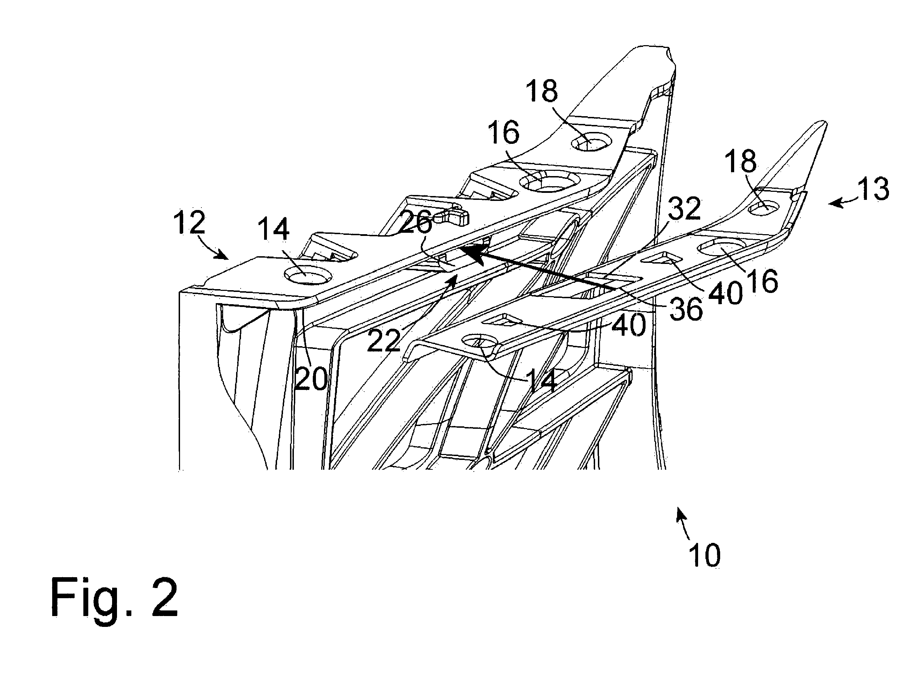

Die Fig. 2 zeigt das System aus einer anderen Perspektive. Auch hier veranschaulicht ein Pfeil, dass zum Einnehmen der Einhängposition der Auflage-Abschnitt 36 zwischen den beiden Klemmflächen 38 und der Anlagefläche 20 in Richtung des Anschlagsbereichs 30 bewegbar ist. Die Einhängvorrichtung 22 wird hierzu zunächst in bzw. teilweise durch die Einhängöffnung 32 geführt.

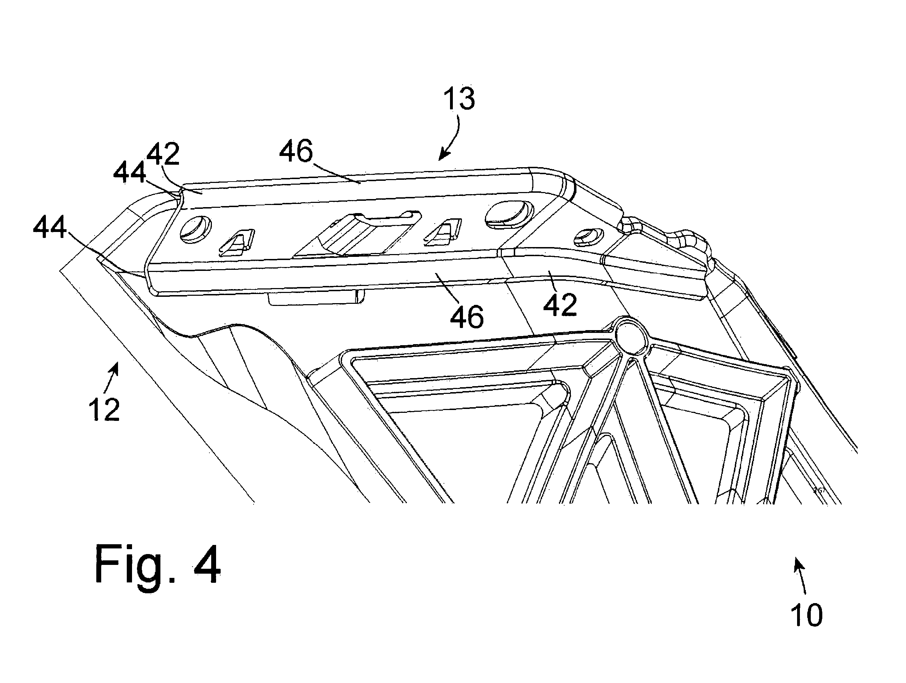

Die Fig. 3 und 4 veranschaulichen den Zustand in dem das Verstärkungselement 13 in der Einhängposition an dem Befestigungsteil 12 vorarretiert ist. Wie der Fig. 4 entnehmbar, weist das Verstärkungselement 13 zwei voneinander beabstandete umgebogene Randbereiche 42 auf, wobei ein Abschnitt 46 eines Randbereichs 42 sich parallel zu einem Abschnitt 46 des anderen Randbereichs 42 erstreckt, und wobei jeder Randbereich 42 im Befestigungszustand auf jeweils einem Randbereich 44 des Befestigungsteils 12 flächig aufliegt. Über die Randbereiche 42 werden zusätzliche Auflageflächen zur Auflage an dem Befestigungsteil 12 bereitgestellt, die eine sehr wirksame zusätzliche Stabilisierung des Verstärkungselements 13 an dem Befestigungsteil 12 ermöglichen. Zudem ist die Verwindungssteifigkeit des Verstärkungselements 13 erhöht und das Verstärkungselement 13 weist einen wesentlich erhöhten Knickwiderstand auf.

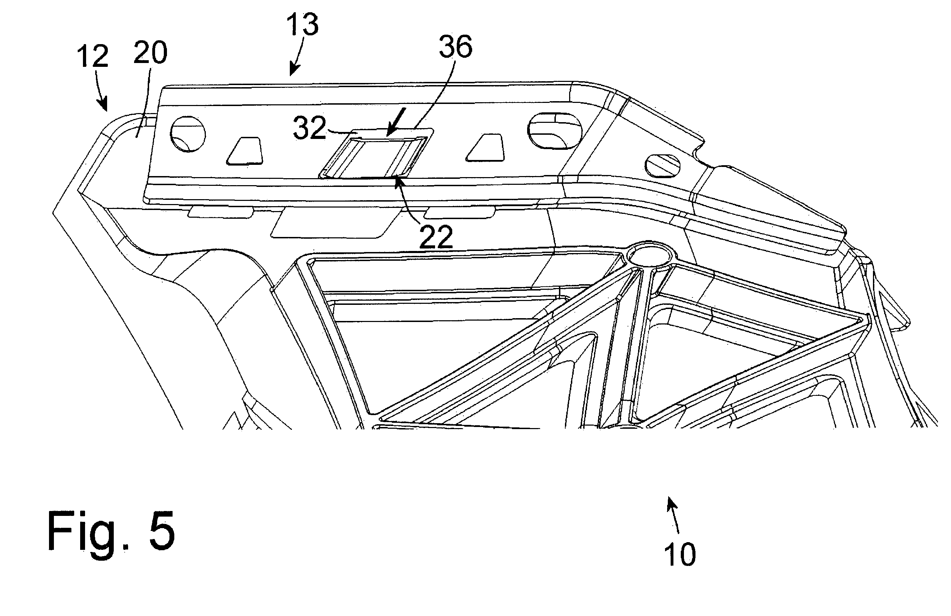

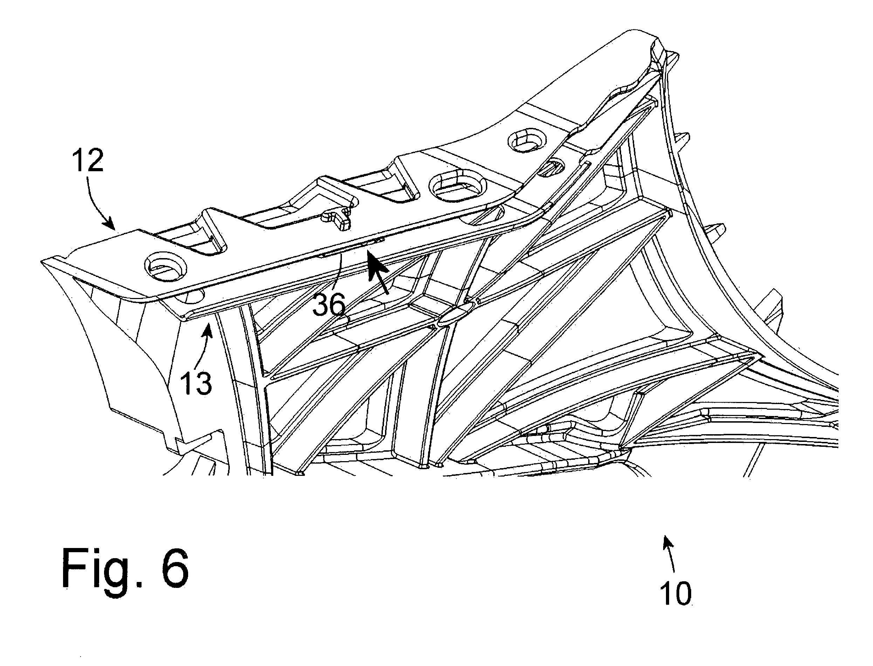

Die Fig. 5 und 6 veranschaulichen den Zustand in dem die Einhängvorrichtung 22 des Befestigungsteils 12 die Einhängöffnung 32 des Verstärkungselements 13 durchsetzt, das Verstärkungselement 13 sich jedoch nicht in der Einhängposition befindet. Die Fig. 5 und 6 veranschaulichen somit also insbesondere einen Zustand während des Bewegens (vgl. auch entsprechende Pfeile in Fig. 5 und 6) des Auflage-Abschnitts 36 in Richtung des Anschlagsbereichs 30 (vgl. auch Fig. 1) zum Einnehmen der Einhängposition.

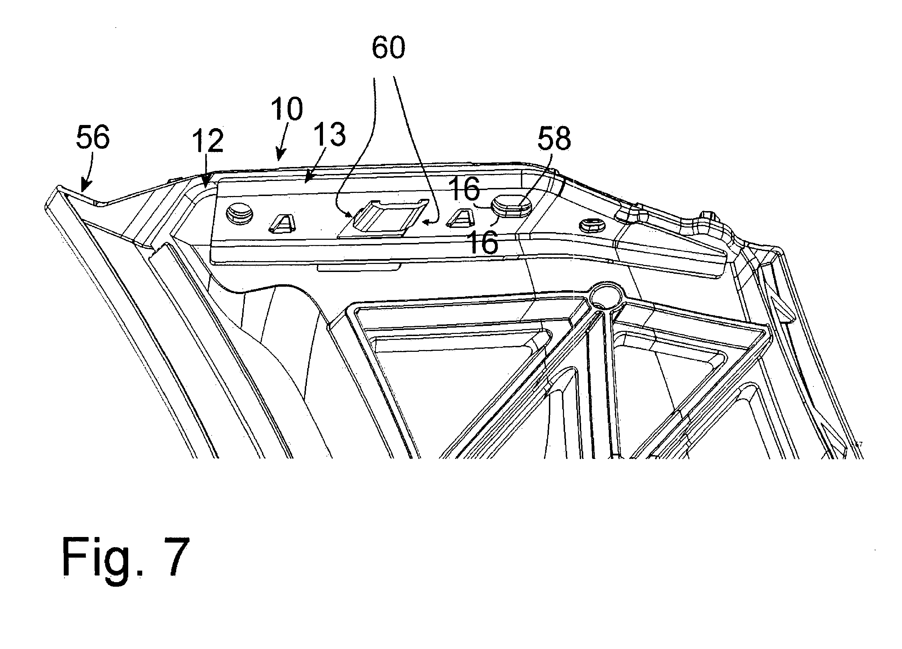

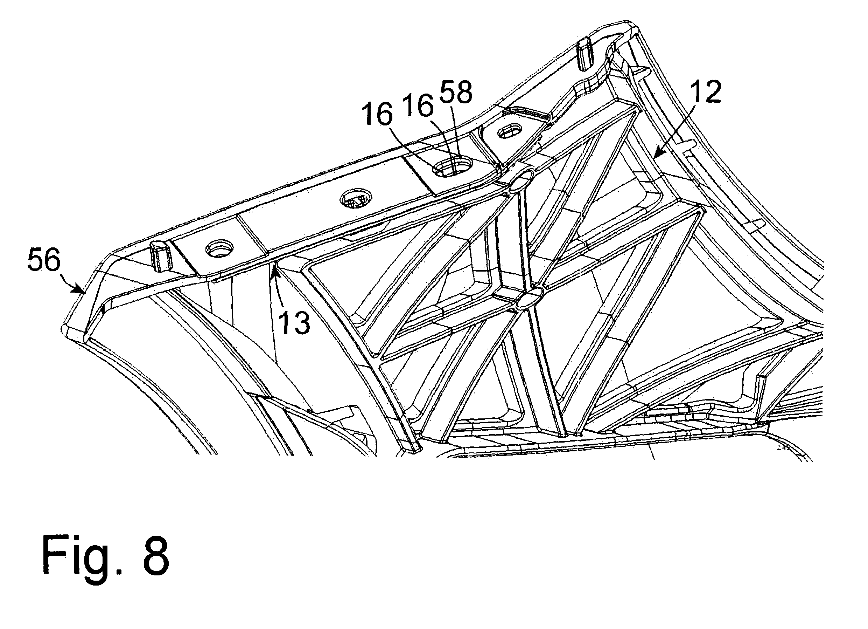

Die Fig. 7 und 8 zeigen dreidimensionale Darstellungen des erfindungsgemäßen Systems 10 zusammen mit einer Stoßfängerverkleidung 56, wobei in diesen Darstellungen das Verstärkungselement 13 in der Einhängposition an dem Befestigungsteil 12 vorarretiert bzw. gehalten ist. Die hier gezeigten Darstellungen veranschaulichen die Situation vor dem Befestigen der Stoßfängerverkleidung 56 an dem hier nicht dargestellten Karosserieteil über zwei Befestigungsmittel in Form von Befestigungsschrauben, wobei jede Befestigungsschraube zum Befestigen der Stoßfängerverkleidung an dem Karosserieteil durch jeweils eine der Befestigungsöffnungen 14, 16 und 18 des Verstärkungselements 13, eine der Befestigungsöffnungen 14, 16 und 18 des Befestigungsteils 12 (in der Fig. 7 und 8 sind nur die Befestigungsöffnungen 16 mit dem entsprechenden Bezugszeichen versehen) und eine der Befestigungsöffnungen 58 der Stoßfängerverkleidung 56 geführt und in eine vorgesehene Gewindeöffnung des Karosserieteils geschraubt wird. Die zur Durchführung für jeweils ein Befestigungsmittel vorgesehenen Befestigungsöffnungen 14, 16 und 18 sind bei dem hier dargestellten Ausführungsbeispiel alle fluchtend zueinander ausgerichtet. Eine der Befestigungsöffnungen 14, 16, oder 18 dient als Reserve zur Aufnahme eines dritten Befestigungsmittels für den Fall, dass eine Fehlfunktion oder Beschädigung der anderen Befestigungsmittel oder des Befestigungssystems 10 selbst vorliegt.

## Patentansprüche

1. System (10) zum Ausbilden einer Befestigung einer Stoßfängerverkleidung (56) an ein Karosserieteil, umfassend ein Befestigungsteil (12) und ein Verstärkungselement (13),
wobei das Befestigungsteil (12) und das Verstärkungselement (13) jeweils wenigstens eine Befestigungsöffnung (14, 16, 18) aufweisen und wobei die Stoßfängerverkleidung (56) über wenigstens ein Befestigungsmittel an dem Karosserieteil befestigbar ist, welches sich durchgehend durch die Befestigungsöffnung (14, 16, 18) des Verstärkungselements (13), die Befestigungsöffnung (14, 16, 18) des Befestigungsteils (12) und eine Befestigungsöffnung (58) der Stoßfängerverkleidung (56) erstreckt,
wobei das Verstärkungselement (13) zur Verstärkung der Befestigung vorgesehen ist,
wobei das Befestigungsteil (12) wenigstens eine Anlagefläche (20) aufweist, auf welcher das Verstärkungselement (13) im Befestigungszustand zumindest bereichsweise aufliegt, und wobei das Befestigungsteil (12) im Befestigungszustand Kontakt zu der Stoßfängerverkleidung (56) aufweist, **dadurch gekennzeichnet, dass**
zum Halten des Verstärkungselements (13) an dem Befestigungsteil (12) eine hakenförmige Einhängvorrichtung (22) und wenigstens ein Rastelement (24) vorgesehen sind, wobei die Einhängvorrichtung (22) und das Rastelement (24) an dem Befestigungsteil (12) angeformt sind und sich von der Anlagefläche (20) erstrecken,
wobei die Einhängvorrichtung (22) eine von der Anlagefläche (20) beabstandete Wadung (26) aufweist, wobei eine der Anlagefläche (20) zugewandte Wandungsseite (28) der Wandung (26) sich bis zu einem an der Anlagefläche (20) angeformten Anschlagsbereich (30) der Einhängvorrichtung (22) erstreckt,
wobei das Verstärkungselement (13) zum Einhängen in die Einhängvorrichtung (22) eine von der Einhängvorrichtung (22) durchsetzbare Einhängöffnung (32) aufweist, die von einem Öffnungsrand (34) begrenzt ist,
wobei in einer Einhängposition des Verstärkungselements (13) ein Auflage-Abschnitt (36) des Öffnungsrands (34) auf dem Anschlagsbereich (30) aufliegt,
und wobei zum Einnehmen der Einhängposition der Auflage-Abschnitt (36) zwischen der Wandungsseite (28) und der Anlagefläche (20) in Richtung des Anschlagsbereichs (30) bewegbar ist,
wobei an dem Verstärkungselement (13) wenigstens eine, vorzugsweise sich durchgehend durch das Verstärkungselement (13) erstreckende, Rastöffnung (40) vorgesehen ist,
und wobei durch Bewegen des Auflage-Abschnitts (36) zwischen der Wandungsseite (28) und der Anlagefläche (20) in Richtung des Anschlagsbereichs (30) die Rastöffnung (40) über das Rastelement (24) schiebbar ist und das Rastelement (24) in der Rastöffnung (40) rastend aufnehmbar ist, sobald die Einhängposition erreicht ist.

2. System (10) nach Anspruch 1, **dadurch gekennzeichnet, dass** an der der Anlagefläche (20) zugewandten Wandungsseite (28) wenigstens eine Klemmfläche (38) ausgebildet ist, wobei zum Einnehmen der Einhängposition der Auflage-Abschnitt (36) zwischen der Klemmfläche (38) und der Anlagefläche (20) in Richtung des Anschlagsbereichs (30) bewegbar ist, und wobei das Verstärkungselement (13) in der Einhängposition klemmend zwischen der Klemmfläche (38) und der Anlagefläche (20) gehalten ist.

3. System (10) nach Anspruch 1 oder 2, **dadurch gekennzeichnet, dass** zwei Rastöffnungen (40) und zwei Rastelemente (24) vorgesehen sind, wobei jeweils eins der Rastelemente (24) dafür vorgesehen ist, in eine der Rastöffnungen (40) einzurasten, wobei sich die Einhängöffnung (32) zwischen den Rastöffnungen (40) befindet.

4. System (10) nach Anspruch 3, **dadurch gekennzeichnet, dass** das Befestigungsteil (12) und das Verstärkungselement (13) jeweils wenigstens zwei Befestigungsöffnungen (14, 16, 18) aufweisen, und wobei sich die beiden Rastöffnungen (40) und die Einhängöffnung (32) zwischen den Befestigungsöffnungen (14, 16, 18) des Verstärkungselements (13) befinden.

5. System (10) nach einem der vorangehenden Ansprüche, **dadurch gekennzeichnet, dass** das Verstärkungselement (13) wenigstens einen umgebogenen Randbereich (42) aufweist.

6. System (10) nach Anspruch 5, **dadurch gekennzeichnet, dass** das Verstärkungselement (13) zwei umgebogene Randbereiche (42) aufweist, die sich wenigstens abschnittsweise in parallelen und voneinander beabstandeten Richtungen erstrecken.

7. System (10) nach Anspruch 5 oder 6, **dadurch gekennzeichnet, dass** der oder jeder Randbereich (42) im Befestigungszustand auf jeweils einem Randbereich (44) des Befestigungsteils (12) flächig aufliegt.

8. System (10) nach einem der vorangehenden Ansprüche, **dadurch gekennzeichnet, dass** das Verstärkungselement (13) in Form eines Spritzgussteils ausgebildet ist, und/oder dass das Befestigungsteil (12) in Form eines Spritzgussteils ausgebildet ist.

9. System (10) nach einem der vorangehenden Ansprüche, **dadurch gekennzeichnet, dass** das Verstärkungselement (13) und/oder das Befestigungsteil (13) eine Partikel- und/oder Faserverstärkung aufweist.

10. System (10) nach einem der vorangehenden Ansprüche 1 bis 7, **dadurch gekennzeichnet, dass** das Verstärkungselement (13) aus einem metallischen Werkstoff gebildet ist, insbesondere aus einem Blech geformt ist.

## Claims

1. System (10) for fixing a bumper skin (56) to a car body part, comprising a fixing part (12) and a reinforcing element (13),
wherein the fixing part (12) and the reinforcing element (13) each have at least one fixing opening (14, 16, 18), and wherein the bumper skin (56) is fixable to the car body part via at least one fixing means which extends continuously through the fixing opening (14, 16, 18) in the reinforcing element (13), the fixing opening (14, 16, 18) in the fixing part (12) and a fixing opening (58) in the bumper skin (56),
wherein the reinforcing element (13) is provided for reinforcing the fixing,
wherein the fixing part (12) has at least one bearing surface (20) on which the reinforcing element (13) rests at least in regions in the fixing state, and wherein, in the fixing state, the fixing part (12) is in contact with the bumper skin (56), **characterized in that**, in order to hold the reinforcing element (13) on the fixing part (12), a hook-shaped hooking-in device (22) and at least one latching element (24) are provided, wherein the hooking-in device (22) and the latching element (24) are integrally formed on the fixing part (12) and extend from the bearing surface (20),
wherein the hooking-in device (22) has a wall (26) spaced apart from the bearing surface (20), wherein a wall side (28) of the wall (26), which wall side faces the bearing surface (20), extends as far as a stop region (30) of the hooking-in device (22), which stop region is integrally formed on the bearing surface (20),
wherein the reinforcing element (13) has, for hooking into the hooking-in device (22), a hooking-in opening (32) through which the hooking-in device (22) can be passed and which is delimited by an opening edge (34),
wherein, in a hooking-in position of the reinforcing element (13), a supporting section (36) of the opening edge (34) rests on the stop region (30),
and wherein, in order to take up the hooking-in position, the supporting section (36) between the wall side (28) and the bearing surface (20) is movable in the direction of the stop region (30),
wherein at least one latching opening (40), preferably extending continuously through the reinforcing element (13), is provided on the reinforcing element (13),
and wherein, by movement of the supporting section (36) between the wall side (28) and the bearing surface (20) in the direction of the stop region (30), the latching opening (40) can be pushed over the latching element (24) and the latching element (24) can be accommodated in a latching manner in the latching opening (40) as soon as the hooking-in position is reached.

2. System (10) according to Claim 1, **characterized in that** at least one clamping surface (38) is formed on the wall side (28) facing the bearing surface (20), wherein, in order to take up the hooking-in position, the supporting section (36) between the clamping surface (38) and the bearing surface (20) is movable in the direction of the stop region (30), and wherein, in the hooking-in position, the reinforcing element (13) is held in a clamping manner between the clamping surface (38) and the bearing surface (20).

3. System (10) according to Claim 1 or 2, **characterized in that** two latching openings (40) and two latching elements (24) are provided, wherein in each case one of the latching elements (24) is provided for latching into one of the latching openings (40), wherein the hook-in opening (32) is located between the latching openings (40).

4. System (10) according to Claim 3, **characterized in that** the fixing part (12) and the reinforcing element (13) each have at least two fixing openings (14, 16, 18), and wherein the two latching openings (40) and the hook-in opening (32) are located between the fixing openings (14, 16, 18) of the reinforcing element (13).

5. System (10) according to one of the preceding claims, **characterized in that** the reinforcing element (13) has at least one bent-over edge region (42).

6. System (10) according to Claim 5, **characterized in that** the reinforcing element (13) has two bent-over edge regions (42) which at least partially extend in directions which are parallel and are spaced apart from one another.

7. System (10) according to Claim 5 or 6, **characterized in that**, in the fixing state, the or each edge region (42) rests in a sheetlike manner on in each case one edge region (44) of the fixing part (12).

8. System (10) according to one of the preceding claims, **characterized in that** the reinforcing element (13) is designed in the form of an injection moulding, and/or **in that** the fixing part (12) is designed in the form of an injection moulding.

9. System (10) according to one of the preceding claims, **characterized in that** the reinforcing element (13) and/or the fixing part (12) have/has a particle and/or fibre reinforcement.

10. System (10) according to one of the preceding Claims 1 to 7, **characterized in that** the reinforcing element (13) is formed from a metallic material, in particular is moulded from sheet metal.

## Revendications

1. Système (10) pour réaliser une fixation d'une peau de pare-chocs (56) à une pièce de carrosserie, comportant une pièce de fixation (12) et un élément de renforcement (13), la pièce de fixation (12) et l'élément de renforcement (13) comprenant respectivement au moins une ouverture de fixation (14, 16, 18), et la peau de pare-chocs (56) pouvant être fixée à la pièce de carrosserie au moyen d'au moins un moyen de fixation qui s'étend de manière continue à travers l'ouverture de fixation (14, 16, 18) de l'élément de renforcement (13), l'ouverture de fixation (14, 16, 18) de la pièce de fixation (12) et une ouverture de fixation (58) de la peau de pare-chocs (56),
l'élément de renforcement (13) étant prévu pour renforcer la fixation,
la pièce de fixation (12) comprenant au moins une surface d'appui (20) sur laquelle repose au moins par endroits l'élément de renforcement (13) dans l'état de fixation, et la pièce de fixation (12) étant en contact avec la peau de pare-chocs (56) dans l'état de fixation, **caractérisé en ce que**
pour maintenir l'élément de renforcement (13) sur la pièce de fixation (12), un dispositif d'accrochage en forme de crochet (22) et au moins un élément d'encliquetage (24) sont prévus, le dispositif d'accrochage (22) et l'élément d'encliquetage (24) étant formés sur la pièce de fixation (12) et s'étendant à partir de la surface d'appui (20),
le dispositif d'accrochage (22) comprenant une paroi (26) située à distance de la surface d'appui (20), un côté de paroi (28) de la paroi (26) qui est tourné vers la surface d'appui (20) s'étendant jusqu'à une zone de butée (30) du dispositif d'accrochage (22) qui est formée sur la surface d'appui (20),
l'élément de renforcement (13) comprenant, en vue de l'accrochage dans le dispositif d'accrochage (22), une ouverture d'accrochage (32) pouvant être traversée par le dispositif d'accrochage (22), laquelle ouverture d'accrochage est délimitée par un bord d'ouverture (34),
une section d'appui (36) du bord d'ouverture (34) reposant sur la zone de butée (30) dans une position d'accrochage de l'élément de renforcement (13),
et, pour adopter la position d'accrochage, la section d'appui (36) pouvant être déplacée entre le côté de paroi (28) et la surface d'appui (20) en direction de la zone de butée (30),
au moins une ouverture d'encliquetage (40), de préférence s'étendant de manière continue à travers l'élément de renforcement (13), étant prévue sur l'élément de renforcement (13),
et au moyen du déplacement de la section d'appui (36) entre le côté de paroi (28) et la surface d'appui (20) en direction de la zone de butée (30), l'ouverture d'encliquetage (40) pouvant glisser sur l'élément d'encliquetage (24), et l'élément d'encliquetage (24) pouvant être reçu par encliquetage dans l'ouverture d'encliquetage (40) dès que la position d'accrochage est atteinte.

2. Système (10) selon la revendication 1, **caractérisé en ce qu'**au moins une surface de serrage (38) est réalisée sur le côté de paroi (28) tourné vers la surface d'appui (20), la section d'appui (36) pouvant être déplacée entre la surface de serrage (38) et la surface d'appui (20) en direction de la zone de butée (30), pour adopter la position d'accrochage, et l'élément de renforcement (13) étant maintenu dans la position d'accrochage par serrage entre la surface de serrage (38) et la surface d'appui (20).

3. Système (10) selon la revendication 1 ou 2, **caractérisé en ce que** deux ouvertures d'encliquetage (40) et deux éléments d'encliquetage (24) sont prévus, un des éléments d'encliquetage (24) étant respectivement prévu pour s'encliqueter dans l'une des ouvertures d'encliquetage (40), l'ouverture d'accrochage (32) se situant entre les ouvertures d'encliquetage (40).

4. Système (10) selon la revendication 3, **caractérisé en ce que** la pièce de fixation (12) et l'élément de renforcement (13) comprennent respectivement au moins deux ouvertures de fixation (14, 16, 18), et les deux ouvertures d'encliquetage (40) ainsi que l'ouverture d'accrochage (32) se situant entre les ouvertures de fixation (14, 16, 18) de l'élément de renforcement (13).

5. Système (10) selon l'une quelconque des revendications précédentes, **caractérisé en ce que** l'élément de renforcement (13) comprend au moins une zone de bord courbée (42).

6. Système (10) selon la revendication 5, **caractérisé en ce que** l'élément de renforcement (13) comprend deux zones de bord courbées (42) qui s'étendent au moins par sections dans des directions parallèles et espacées l'une de l'autre.

7. Système (10) selon la revendication 5 ou 6, **caractérisé en ce que** la ou chaque zone de bord (42) repose à plat sur une zone de bord (44) respective de la pièce de fixation (12) dans l'état de fixation.

8. Système (10) selon l'une quelconque des revendications précédentes, **caractérisé en ce que** l'élément de renforcement (13) est réalisé sous la forme d'une pièce moulée par injection, et/ou **en ce que** la pièce de fixation (12) est réalisée sous la forme d'une pièce moulée par injection.

9. Système (10) selon l'une quelconque des revendications précédentes, **caractérisé en ce que** l'élément de renforcement (13) et/ou la pièce de fixation (13) comprennent un renforcement par des particules et/ou des fibres.

10. Système (10) selon l'une quelconque des revendications précédentes 1 à 7, **caractérisé en ce que** l'élément de renforcement (13) est formé à partir d'un matériau métallique, en particulier est façonné à partir d'une tôle.
